# EUROPEAN PATENT APPLICATION

(11) **EP 3 139 288 A1**
(43) Date of publication of application: **08.03.2017**
(21) Application number: 15806661.3
(22) Date of filing: 29.05.2015
(51) Int. Cl.: G06F 17/30

(54) **ITEM RECOMMENDATION METHOD AND DEVICE**

(30) Priority: 10.06.2014 CN 201410255253
(71) Applicant: Huawei Technologies Co. Ltd., Shenzhen, Guangdong 518129 (CN)
(72) Inventor: SUN, Huyang, Shenzhen Guangdong 518129 (CN)
(74) Representative: Pfenning, Meinig & Partner mbB
(86) International application number: PCT/CN2015/080165
(87) International publication number: WO 2015/188699

(57) **Abstract**

An item recommendation method and apparatus. The method includes: obtaining request data of a first user, determining m new items satisfying the request data, and ordering the m new items according to bid data corresponding to the m new items, to obtain ordering data of the m new items, where the m new items are items received within preset duration, and m is a positive integer (110); and generating a recommendation list for the first user according to the ordering data of the m new items (120). According to the item recommendation method and apparatus in the embodiments of the present invention, ordering data of new items is determined according to bid data of the new items, and a recommendation list is generated according to the ordering data of the new items, so that a function of recommending new items is implemented according to bid data of the new items, thereby resolving a problem of cold start of new items in a recommendation system.

## Description

This application claims priority to Chinese Patent Application No. 201410255253.3, filed with the Chinese Patent Office on June 10, 2014, and entitled "ITEM RECOMMENDATION METHOD AND APPARATUS ", which is incorporated herein by reference in its entirety.

### TECHNICAL FIELD

The present invention relates to the field of network technologies, and in particular, to an item recommendation method and apparatus.

### BACKGROUND

With development of information technologies and electronic commerce, products grow rapidly in number and become increasingly diversified. For a user, it is extremely difficult to find a product in which the user is interested from a huge quantity of products. For a manufacturer of a product, it is also extremely difficult to draw attention of a large quantity of users to the product of the manufacturer. In this case, a recommendation system emerges, and the recommendation system can actively recommend, to a user, a product that satisfies a requirement of the user.

A conventional recommendation system has a problem of cold start of new items. For example, in a recommendation technology based on collaborative filtering, a model needs to be established for a rating result of an item to be recommended, that is, the item needs to be recommended to a user based on a rating on the item that are given by a user. For a new item added to the recommendation system, a recommendation function of the recommendation system for the new item is invalid due to lack of sufficient rating information or even lack of rating information.

### SUMMARY

Embodiments of the present invention provide an item recommendation method and apparatus, which can resolve a problem of cold start of new items.

According to a first aspect, an item recommendation method is provided, where the method includes: obtaining request data of a first user, determining m new items satisfying the request data, and ordering the m new items according to bid data corresponding to the m new items, to obtain ordering data of the m new items, where the m new items are items received within preset duration, and m is a positive integer; and generating a recommendation list for the first user according to the ordering data of the m new items.

With reference to the first aspect, in a first possible implementation manner, before the determining m new items satisfying the request data, the method further includes: obtaining attribute data of M new items that are received within the preset duration, where M is a positive integer greater than m; and the determining m new items satisfying the request data includes: determining, from the M new items according to the attribute data of the M new items, the m new items satisfying the request data.

With reference to the first aspect or the first possible implementation manner, in a second possible implementation manner, after the obtaining request data of a first user, the method further includes: obtaining attribute data of N history items, where N is a positive integer; obtaining behavioral data of X users, where X is a positive integer; and training the attribute data of the N history items and the behavioral data of the X users by using a deep learning technology, to obtain a recommendation model; where after the obtaining request data of a first user, the method further includes: determining, according to the attribute data of the N history items, attribute data of n history items satisfying the request data, where n is a positive integer less than N; and inputting the request data and the attribute data of the n history items into the recommendation model, to obtain an ordering factor of the n history items; and the generating a recommendation list for the first user according to the ordering data of the m new items includes: generating the recommendation list for the first user according to the ordering data of the m new items and the ordering factor of the n history items.

With reference to the second possible implementation manner, in a third possible implementation manner, the training the behavioral data of the X users and the attribute data of the N history items by using a deep learning technology, to obtain a recommendation model includes: performing feature transformation on the behavioral data of the X users and the attribute data of the N history items; and training, by using the deep learning technology, the behavioral data of the X users and the attribute data of the N history items on which the feature transformation has been performed, to obtain the recommendation model.

With reference to the third possible implementation manner, in a fourth possible implementation manner, the performing feature transformation on the behavioral data of the X users and the attribute data of the N history items includes: determining user behavior statistical values respectively corresponding to data types of the behavioral data of the X users, and determining user behavior statistical values respectively corresponding to data types of the attribute data of the N history items; and replacing data respectively corresponding to the data types of the behavioral data of the X users with the user behavior statistical values respectively corresponding to the data types of the behavioral data of the X users, and replacing data respectively corresponding to the data types of the attribute data of the N history items with the user behavior statistical values respectively corresponding to the data types of the attribute data of the N history items.

With reference to the first aspect or any possible implementation manner of the first to fourth possible implementation manners, in a fifth possible implementation manner, the item is an application App.

According to a second aspect, an item recommendation method is provided, where the method includes: obtaining request data of a first user; determining m items satisfying the request data, where m is a positive integer; determining an order of the m items according to a recommendation model, where the recommendation model is obtained by using a deep learning technology; and generating a recommendation list for the first user according to the order of the m items.

With reference to the second aspect, in a first possible implementation manner of the second aspect, before the determining an order of the m items according to a recommendation model, the method further includes: obtaining behavioral data of X users, where X is a positive integer; obtaining attribute data of M items, where M is a positive integer; and training the behavioral data of the X users and the attribute data of the M items by using the deep learning technology, to obtain the recommendation model.

With reference to the first possible implementation manner of the second aspect, in a second possible implementation manner of the second aspect, the training the behavioral data of the X users and the attribute data of the M items by using the deep learning technology, to obtain the recommendation model includes: performing feature transformation on the behavioral data of the X users and the attribute data of the M items; and training, by using the deep learning technology, the behavioral data of the X users and the attribute data of the M items on which the feature transformation has been performed, to obtain the recommendation model.

With reference to the second possible implementation manner of the second aspect, in a third possible implementation manner of the second aspect, the performing feature transformation on the behavioral data of the X users and the attribute data of the M items includes: determining user behavior statistical values respectively corresponding to data types of the behavioral data of the X users, and determining user behavior statistical values respectively corresponding to data types of the attribute data of the M items; and replacing data respectively corresponding to the data types of the behavioral data of the X users with the user behavior statistical values respectively corresponding to the data types of the behavioral data of the X users, and replacing data respectively corresponding to the data types of the attribute data of the M items with the user behavior statistical values respectively corresponding to the data types of the attribute data of the M items.

With reference to any possible implementation manner of the first or second or third possible implementation manner of the second aspect, in a fourth possible implementation manner of the second aspect, the determining m items satisfying the request data includes: determining, from the M items according to the attribute data of the M items, the m items satisfying the request data; and the determining an order of the m items according to the recommendation model includes: inputting the request data and attribute data of the m items into the recommendation model, to obtain an ordering factor of the m items, and determining the order of the m items according to the ordering factor of the m items.

With reference to the second aspect or any possible implementation manner of the first to fourth possible implementation manners of the second aspect, in a fifth possible implementation manner of the second aspect, the item is an application App.

According to a third aspect, an item recommendation apparatus is provided, where the apparatus includes: a request data obtaining module, configured to obtain request data of a first user; a determining module, configured to determine m new items satisfying the request data, where the m new items are items received within preset duration, and m is a positive integer; an ordering data obtaining module, configured to order the m new items according to bid data of the m new items, to obtain ordering data of the m new items; and a recommendation module, configured to generate a recommendation list for the first user according to the ordering data of the m new items.

With reference to the third aspect, in a first possible implementation manner of the third aspect, the apparatus further includes: an attribute data obtaining module, configured to: before the determining module determines the m new items satisfying the request data, obtain attribute data of M new items that are received within the preset duration, where M is a positive integer greater than m; and the determining module is specifically configured to determine, from the M new items according to the attribute data of the M new items that is obtained by the attribute data obtaining module, the m new items satisfying the request data.

With reference to the third aspect or the first possible implementation manner of the third aspect, in a second possible implementation manner of the third aspect, the attribute data obtaining module is further configured to obtain attribute data of N history items, where N is a positive integer; and the apparatus further includes: a behavioral data obtaining module, configured to obtain behavioral data of X users, where X is a positive integer; and a model training module, configured to train, by using a deep learning technology, the attribute data of the N history items that is obtained by the attribute data obtaining module and the behavioral data of the X users that is obtained by the behavioral data obtaining module, to obtain a recommendation model; where the determining module is further configured to: after the request data obtaining module obtains the request data of the first user, determine, according to the attribute data of the N history items that is obtained by the attribute data obtaining module, n history items satisfying the request data, where n is a positive integer less than N; the recommendation module is further configured to input the request data and attribute data of the n history items into the recommendation model, to obtain an ordering factor of the n history items; and the recommendation module is specifically configured to generate the recommendation list for the first user according to the ordering data of the m new items and the ordering factor of the n history items.

With reference to the second possible implementation manner of the third aspect, in a third possible implementation manner of the third aspect, the model training module is specifically configured to: perform feature transformation on the behavioral data of the X users that is obtained by the behavioral data obtaining module and the attribute data of the N history items that is obtained by the attribute data obtaining module, and train, by using the deep learning technology, the behavioral data of the X users and the attribute data of the N history items on which the feature transformation has been performed, to obtain the recommendation model.

With reference to the third possible implementation manner of the third aspect, in a fourth possible implementation manner of the third aspect, the model training module is specifically configured to: determine user behavior statistical values respectively corresponding to data types of the behavioral data of the X users, and determine user behavior statistical values respectively corresponding to data types of the attribute data of the N history items; and replace data respectively corresponding to the data types of the behavioral data of the X users with the user behavior statistical values respectively corresponding to the data types of the behavioral data of the X users, and replace data respectively corresponding to the data types of the attribute data of the N history items with the user behavior statistical values respectively corresponding to the data types of the attribute data of the N history items.

With reference to the third aspect or any possible implementation manner of the first to fourth possible implementation manners of the third aspect, in a fifth possible implementation manner of the third aspect, the item is an application App.

According to a fourth aspect, an item recommendation apparatus is provided, where the apparatus includes: a request data obtaining module, configured to obtain request data of a first user; a determining module, configured to determine m items that satisfy the request data obtained by the request data obtaining module, where m is a positive integer, and the determining module is further configured to determine an order of the m items according to a recommendation model, where the recommendation model is obtained by using a deep learning technology; and a recommendation module, configured to generate a recommendation list for the first user according to the order of the m items that is determined by the recommendation module.

With reference to the fourth aspect, in a first possible implementation manner of the fourth aspect, the apparatus further includes: a behavioral data obtaining module, configured to obtain behavioral data of X users before the determining modules determines the order of the m items according to the recommendation model, where X is a positive integer; an attribute data obtaining module, configured to obtain attribute data of M items before the determining module determines the order of the m items according to the recommendation model, where M is a positive integer greater than m; and a model training module, configured to train, by using the deep learning technology, the behavioral data of the X users that is obtained by the behavioral data obtaining module and the attribute data of the M items that is obtained by the attribute data obtaining module, to obtain the recommendation model.

With reference to the first possible implementation manner of the fourth aspect, in a second possible implementation manner of the fourth aspect, the model training module is specifically configured to: perform feature transformation on the behavioral data of the X users and the attribute data of the M items, and train, by using the deep learning technology, the behavioral data of the X users and the attribute data of the M items on which the feature transformation has been performed, to obtain the recommendation model.

With reference to the second possible implementation manner of the fourth aspect, in a third possible implementation manner of the fourth aspect, the model training module is specifically configured to: determine user behavior statistical values respectively corresponding to data types of the behavioral data of the X users, and determine user behavior statistical values respectively corresponding to data types of the attribute data of the M items; and replace data respectively corresponding to the data types of the behavioral data of the X users with the user behavior statistical values respectively corresponding to the data types of the behavioral data of the X users, and replace data respectively corresponding to the data types of the attribute data of the M items with the user behavior statistical values respectively corresponding to the data types of the attribute data of the M items.

With reference to the first or second or third possible implementation manner of the fourth aspect, in a fourth possible implementation manner of the fourth aspect, the determining module is specifically configured to determine, from the M items according to the attribute data of the M items that is obtained by the attribute data obtaining module, the m items satisfying the request data; and the determining module is specifically configured to: input the request data and attribute data of the m items into the recommendation model, to obtain an ordering factor of the m items, and determine the order of the m items according to the ordering factor of the m items.

With reference to the fourth aspect or any possible implementation manner of the first to fourth possible implementation manners of the fourth aspect, in a fifth possible implementation manner of the fourth aspect, the item is an application App.

Based on the foregoing technical solutions, ordering data of new items is determined according to bid data of the new items, and a recommendation list is generated according to the ordering data of the new items, so that new items can be recommended according to bid data of the new items, thereby resolving a problem of cold start of new items in a recommendation system.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of an item recommendation method according to an embodiment of the present invention;
FIG. 2 is a schematic flowchart of an item recommendation method according to another embodiment of the present invention;
FIG. 3 is a schematic flowchart of an item recommendation method according to another embodiment of the present invention;
FIG. 4 is a schematic block diagram of a recommendation system according to an embodiment of the present invention;
FIG. 5 is a schematic block diagram of an item recommendation apparatus according to an embodiment of the present invention;
FIG. 6 is a schematic block diagram of an item recommendation apparatus according to another embodiment of the present invention;
FIG. 7 is a schematic block diagram of an item recommendation apparatus according to another embodiment of the present invention;
FIG. 8 is a schematic block diagram of an item recommendation apparatus according to another embodiment of the present invention;
FIG. 9 is a schematic block diagram of an item recommendation apparatus according to another embodiment of the present invention; and
FIG. 10 is a schematic block diagram of an item recommendation apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

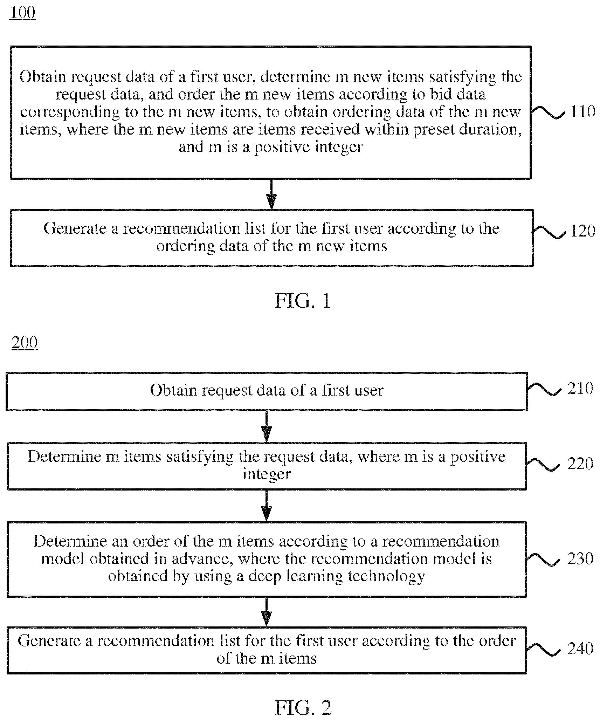

FIG. 1 is a schematic flowchart of an item recommendation method 100 according to an embodiment of the present invention, and the method 100 may be performed by a recommendation system. As shown in FIG. 1, the method 100 includes the following content:
110: Obtain request data of a first user, determine m new items satisfying the request data, and order the m new items according to bid data corresponding to the m new items, to obtain ordering data of the m new items, where the m new items are items received within preset duration, and m is a positive integer.

It should be understood that a sequence in which actions in step 110 are performed is not limited in this embodiment of the present invention. The ordering the m new items according to bid data corresponding to the m new items, to obtain ordering data of the m new items may be executed in advance of the obtaining request data of a first user, or may be executed in parallel with the obtaining request data of a first user. In other words, new items may be ordered in advance according to bid data of the new items, to obtain ordering data of the new items. After the m new items satisfying the request data of the user are determined, request data of the m new items that have been obtained before the request data of the first user is obtained is directly retrieved. Alternatively, new items may be ordered according to ordering data of the new items at the same time when the request data of the first user is obtained, to obtain the ordering data of the new items. After the m new items satisfying the request data of the user are determined, obtained request data of the m new items are directly retrieved.

The preset duration is set by the recommendation system according to a specific need, for example, may be a recent week or month, or the like.

120: Generate a recommendation list for the first user according to the ordering data of the m new items.

Specifically, an order of the m new items in the recommendation list may be determined according to the ordering data of the m new items, and then the recommendation list for the first user is generated. The recommendation list includes information about the m new items that are recommended to the first user.

Because the m new items are recently received new items submitted by designers or developers, the m new items may have no user rating information, or the m new items may have an excessively small amount of user rating information. Therefore, the m new items cannot be recommended to a user according to rating information of the m new items, that is, there is a problem of cold start of new items.

In this embodiment of the present invention, the new items may be recommended to a user according to the bid data of the new items that are provided by item designers or developers. The designers or the developers are concerned with the new items ordered according to the bid data. The new items that are ordered according to the bid data are recommended to a user, so that the new items can be presented to the user and ratings of behaviors (such as downloading, bookmarking, or browsing) of users on the new items can be collected, and the recommendation system can survive a cold start period and efficiency of the recommendation system can be improved, thereby resolving a problem of cold start of the new items.

Therefore, according to the item recommendation method in this embodiment of the present invention, ordering data of new items is determined according to bid data of the new items, and a recommendation list is generated according to the ordering data of the new items, so that new items can be recommended according to bid data of the new items, so that a problem of cold start of new items can be resolved.

It should be understood that in this embodiment of the present invention, when bid data of a new item submitted by a client is received, the client may select a specific charging mode from payment modes provided in the recommendation system to bid. The recommendation system may frequently receive bid data submitted by clients and update corresponding data, and the recommendation system makes no examination. For example, a client may select a charging mode such as CPD (cost-per download, cost-per download) or CPT (cost-per time, cost-per time).

In this embodiment of the present invention, a status of the designer or the developer of the item may be further displayed, for example, present bid information or present budget information and history statistical information (for example, a quantity of times of presentation of the submitted item) of the new item submitted by the designer or the developer. In this way, an operation and a query of the item designer or developer may be facilitated.

It should be understood that the item in this embodiment of the present invention refers to an object that is recommended by the recommendation system to a user, and may be an application App (Application), or may be a commodity or a book, which is not limited in this embodiment of the present invention.

Specifically, in this embodiment of the present invention, before step 110 of determining m new items satisfying the request data, the method 100 further includes: obtaining attribute data of M new items that are received within the preset duration, where M is a positive integer greater than m. Correspondingly, the m new items satisfying the request data are determined from the M new items according to the attribute data of the M new items.

In other words, in this embodiment of the present invention, the m new items satisfying the request of the user may be determined from the M new items received in the recommendation system. Correspondingly, the M new items may be ordered according to bid data of the M new items, to determine ordering data of the M new items. After the m new items satisfying the request data are determined, the ordering data of the m new items are directly obtained from the ordering data of the M new items.

The attribute data of the item may include some basic information of the new item, for example, information such as an item type, an item name, an item description, an item developer, or a user rating. The ordering data and the attribute data of the multiple new items may be stored in a database. The M new items are ordered according to the bid data, which may be to order the M new items according to real-time bids, or may be to order the M new items according to updated bids within a set time period. In this embodiment of the present invention, bid data of only new items that are received within the preset duration (for example, within a week or a month) is received, and the new items are ordered according to the bid data. Bid data of history items that are received beyond the preset duration is not received, and the history items are not ordered according to the bid data. It should be further understood that when the new items received within the preset duration are ordered according to the bid data, the new items may be classified according to different rules, and are separately ordered. The new items may be classified according to item types of the items, and are ordered according to the bid data, for example, are separately ordered according to game-type items and music-type items.

In this embodiment of the present invention, the multiple new items may be further ordered according to the bid data, quality data, and on-shelf time data of the multiple new items, to determine the ordering data of the multiple new items. The quality data is information obtained through offline mining by the recommendation system, and may be obtained by means of an evaluation of a correlation of the new item with a history item having user rating information.

In other words, in addition to that bid ranking is performed on the new items according to the bid data of the new items, the new items may also be ordered with reference to quality of the new items and/or on-shelf time of the new items, to determine the ordering data of the new items. For example, in a case in which the bid data is the same, a new item with higher quality is arranged in front; in this way, at the same time when gains are obtained by charging the designer or the developer, user experience is not affected. Alternatively, an item with a later on-shelf time is arranged in front; in this way, a latest released new item with which the designer or the developer is concerned may be recommended to a user in time.

Optionally, as another embodiment, after step 110, the method 100 further includes: obtaining attribute data of N history items, where N is a positive integer; determining, from the N history items according to the attribute data of the N history items, n history items satisfying the request data, where n is a positive integer less than N; and inputting the request data and the attribute data of the n history items into a recommendation model obtained in advance, to obtain an ordering factor of the n history items. Correspondingly, the recommendation list for the first user is generated according to the ordering data of the m new items and the ordering factor of the n history items.

The history item refers to an item received beyond the preset duration. When the history items received beyond the preset duration are recommended to a user, an order of the history items in the recommendation list is determined according to the recommendation model obtained in advance. The order of the m new items in the recommendation list may be determined according to the ordering data of the m new items, an order of the n history items in the recommendation list is determined according to the ordering factor of the n history items, and then the recommendation list for the first user is generated.

It should be understood that the recommendation model in this embodiment of the present invention may be obtained by using a deep learning technology. Alternatively, the recommendation model may be obtained by using a large-scale sparse linear model recommendation technology.

As another embodiment, before the inputting the request data and the attribute data of the n history items into a recommendation model obtained in advance, the method 100 further includes: obtaining behavioral data of X users and attribute data of N history items, where X is a positive integer; and training the behavioral data of the X users and the attribute data of the N history items by using a deep learning technology, to obtain a recommendation model.

Specifically, in this embodiment of the present invention, attribute data of N history items is obtained, where N is a positive integer; behavioral data of X users is obtained, where X is a positive integer; and the attribute data of the N history items and the behavioral data of the X users are trained by using a deep learning technology, to obtain a recommendation model. After the obtaining request data of a first user, the method 100 further includes: determining, according to the attribute data of the N history items, attribute data of n history items satisfying the request data, where n is a positive integer less than N; and inputting the request data and the attribute data of the n history items into the recommendation model, to obtain an ordering factor of the n history items, where the generating a recommendation list for the first user according to the ordering data of the m new items includes: generating the recommendation list for the first user according to the ordering data of the m new items and the ordering factor of the n history items.

The behavioral data of the user may include, for example, rating, browsing, clicking, bookmarking, or downloading of an item. The attribute data of each history item of the N history items is related to behavioral data of at least one user of the X users, that is, each history item of the N history items is rated, browsed, clicked, bookmarked, or downloaded by at least one user of the X users, and so on. In other words, each history item of the N history items has behavioral data of at least one user of the X users.

When the recommendation model is obtained by using the deep learning technology, attribute data (such as gender, age, and preference) of the user may be further trained by using the deep learning technology. A more accurate customized recommendation may be provided by analyzing attribute data of a user. In addition, the attribute data of the new items that are received within the preset duration may be further trained by using the deep learning technology.

The deep learning technology is essentially to learn a more useful feature by building a machine learning model with many hidden layers and by using massive training data, thereby finally improving accuracy of classification and prediction. In an existing recommendation technology based on a large-scale sparse linear model, feature engineering (feature engineering) is needed, that is, a feature expert needs to keep deepening understanding of a problem and extracting features, which consumes a large amount of human and material resources. In this embodiment of the present invention, data is trained by using the deep learning technology, which can avoid a large amount of feature engineering because in the deep learning technology, unsupervised feature-learning (feature-learning) can be performed, and a feature is learned by using data, that is, a feature expert does not need to keep extracting features, so that a large amount of human and material resources consumed for manual feature extraction can be reduced.

In this embodiment of the present invention, the recommendation model that is obtained according to the deep learning technology may include a multi-layer neural network structure including an input layer, a hidden layer (multiple layers), and an output layer, where a connection exists between only adjacent nodes, and no connection exists between nodes of a same layer and between nodes of different layers. Each node represents a feature extracted by using the deep learning, and each connection corresponds to a weight value. When data is trained by using the deep learning technology, low-layer features of data of an item (such as attribute data of a history item) and of data of multiple users (such as behavioral data of the multiple users and attribute data of the multiple users) are automatically extracted, and then deep learning further continues to be performed on the extracted low-layer features. For example, the low-layer features are combined linearly or nonlinearly, to obtain high-layer features of the data of the item and of the data of the multiple users. An association relationship between the data of the item and the data of the multiple users may be obtained by using the high-layer features. The association relationship between the data of the item and the data of the users may represent a degree of preference of the users for the item, and more specifically, may represent a probability that a user downloads the item. An item with a higher degree of user preference or an item with a higher probability of being downloaded by a user should be arranged in front in the recommendation list during recommendation to a user. In this embodiment of the present invention, when request data of a user and data of items that are to be recommended to a user are input into the recommendation model, the recommendation model can output an ordering factor of the items that are to be recommended to the user, where the ordering factor is used to determine an order of the items in a recommendation list that are to be recommended to the user.

Specifically, in this embodiment of the present invention, the training the behavioral data of the X users and the attribute data of the N history items by using a deep learning technology, to obtain a recommendation model includes: performing feature transformation on the behavioral data of the X users and the attribute data of the N history items; and training, by using the deep learning technology, the behavioral data of the X users and the attribute data of the N history items on which the feature transformation has been performed, to obtain the recommendation model.

Specifically, in this embodiment of the present invention, the performing feature transformation on the behavioral data of the X users and the attribute data of the N history items includes: determining user behavior statistical values respectively corresponding to data types of the behavioral data of the X users, and determining user behavior statistical values respectively corresponding to data types of the attribute data of the N history items; and replacing data respectively corresponding to the data types of the behavioral data of the X users with the user behavior statistical values respectively corresponding to the data types of the behavioral data of the X users, and replacing data respectively corresponding to the data types of the attribute data of the N history items with the user behavior statistical values respectively corresponding to the data types of the attribute data of the N history items.

In other words, the feature transformation refers to use of a user behavior statistical value (such as a download behavior statistical value), which corresponds to each data type of all the data types of the behavioral data of the users and the attribute data of the history items, in place of the data as training data for deep learning. For example, original segmentation data of an item name is "game", and a user download probability (a quantity of times of download/a quantity of times of browsing) corresponding to the original data "game" is used to replace original data "game" in all items. For another example, original data in data of a user is "22 years old", and a probability (a quantity of times of download/a quantity of times of browsing) that users download an application and that corresponds to the original data "22 years old" is used to replace the original data "22 years old".

Because the data of the users and the attribute data of the history items have relatively many feature types and the feature types are relatively sparse, during training by means of deep learning, an amount of computation of model input substantially increases and a training effect is reduced. The data of the users and the attribute data of the history items on which feature transformation is performed have fewer feature types, and data is changed into a continuous value feature (for example, a behavior statistical value is a decimal ranging from 0 to 1), which may be more suitable for training by using the deep learning technology.

The data of the users and the attribute data of the history items have relatively many feature types, but each type of feature has relatively few values. The deep learning technology is relatively suitable for data (such as image data) that has relatively few feature types and in which each type of feature has relatively many values. Therefore, for the characteristic that the data of the users and the attribute data of the history items have relatively many feature types, as described above, in this embodiment of the present invention, feature transformation processing is performed on the data of the users and the attribute data of the history items. In addition, for the characteristic that each type of feature of the data of the users and the attribute data of the history items has relatively few values, model complexity may be increased for processing.

Specifically, in this embodiment of the present invention, after the multiple new items and/or history items satisfying the request data of the first user are determined, the multiple new items and/or history items may be further filtered according to another piece of data. The multiple new items and/or history items may be further filtered according to history behavioral data (for example, browsing, downloading, or bookmarking of an item) of the user. For example, an item that is being browsed, already downloaded, or already bookmarked by the user is further filtered out from the multiple new items and/or history items satisfying the request data of the first user, so that efficiency of item recommendation to the user can be improved.

An order of new items in the recommendation list may be preset. The new items may be arranged, according to ordering data, at positions preset in the recommendation list, and history items are arranged at remaining positions according to an ordering factor. It should be understood that a method by using which the new items are arranged, according to the ordering data, at the positions preset in the recommendation list is not limited in this embodiment of the present invention. For example, presentation positions of the new items in the recommendation list may be directly set, and the new items are directly ordered at the set presentation positions according to the ordering data. For example, it is determined that there are five new items among items that are to be recommended to a user. It may be set that the first five items in the recommendation list are new items, and an order of the five new items in the recommendation list is determined according to ordering data. In addition, an ordering factor of the new items may be further calculated according to the recommendation model, and the order of the new items in the recommendation list is determined according to the ordering factor of the new items in combination with the ordering data when the recommendation list is generated.

According to the recommendation method in this embodiment of the present invention, a commercial promotion action of bid ranking is integrated with the recommendation system, the order of the new items in the recommendation list is determined according to the bid data of the new items, so as to recommend the new items to a user, and the order of history items in the recommendation list is determined according to the ordering factor generated by the recommendation model, so as to recommend the history items to a user, so that at the same time when gains are obtained by charging an item designer or developer, user experience is not affected; this is because an item that has a high user rating or that is frequently downloaded or bookmarked is located at a higher position in the recommendation list when the history items are recommended to a user according to the ordering factor generated by the recommendation model, these items have already gained approval of history users, and user experience of the user is not affected when the items are recommended to the user.

It should be understood that in this embodiment of the present invention, the attribute data and the ordering data that are of the new items and the attribute data of the history items may be obtained by using an index, and data of related items in a database can be quickly found by using the index according to a keyword, which are not limited in this embodiment of the present invention. Performance of the recommendation system can be improved by searching for data of an item by using the index, and data of an item satisfying request data can be quickly found from the index according to the request data of a user.

Specifically, in this embodiment of the present invention, the request data of the first user may include item requirement data and terminal device data. Items satisfying the item requirement data may be determined according to attribute data of the items, and then new items and/or history items supporting the terminal device data are determined from the items satisfying the item requirement data. The item requirement data may include a keyword input by the user or a tab clicked by the user. The terminal device data may include: a model of a mobile phone of the user, an operating system, or the like. For example, if a user searches for a game application, and a mobile phone of the user is an Apple phone, the recommendation system first obtains game applications by using an index, then performs screening on the game applications to choose applications supporting an Apple phone, then orders the applications, generates a recommendation list, and displays the recommendation list to the user.

It should be understood that in this embodiment of the present invention, behavioral data of the first user for the new items and history items that are in the recommendation list may be obtained. The recommendation system obtains behavioral data (such as clicking, bookmarking, or downloading) of a user for the items in the recommendation list in time, and the recommendation system is automatically iterated and updated according to the behavioral data fed back by the user.

Therefore, according to the item recommendation method in this embodiment of the present invention, ordering data of new items is determined according to bid data of the new items, and a recommendation list is generated according to the ordering data of the new items, so that new items can be recommended according to bid data of the new items, so that a problem of cold start of new items can be resolved.

FIG. 2 is a schematic flowchart of an item recommendation method 200 according to another embodiment of the present invention, and the method 200 may be performed by a recommendation system. As shown in FIG. 2, the method 200 includes the following content.

210: Obtain request data of a first user.

220: Determine m items satisfying the request data, where m is a positive integer.

230: Determine an order of the m items according to a recommendation model obtained in advance, where the recommendation model is obtained by using a deep learning technology.

240: Generate a recommendation list for the first user according to the order of the m items.

In a recommendation technology based on a large-scale sparse linear model, feature engineering (feature engineering) is needed, that is, a feature expert needs to keep deepening understanding of a problem and extracting features, which consumes a large amount of human and material resources. In this embodiment of the present invention, training is performed by using the deep learning technology. Because in the deep learning technology, unsupervised feature-learning (feature-learning) can be performed, and a feature is learned by using data, that is, a feature expert does not need to keep extracting features, so that a large amount of human and material resources consumed for manual feature extraction are reduced.

Therefore, according to the item recommendation method in this embodiment of the present invention, an order of items in the recommendation list is determined according to the recommendation model, and the recommendation model uses the deep learning technology for the unsupervised feature-learning, so that a feature can be learned by using data, and a large amount of human and material resources consumed for manual feature extraction can be reduced.

It should be understood that the item in this embodiment of the present invention refers to an object that is recommended by the recommendation system to a user, and may be an application App (Application), or may be a commodity or a book, which is not limited in this embodiment of the present invention.

In this embodiment of the present invention, before step 230, the method 200 further includes: obtaining behavioral data of X users, where X is a positive integer; obtaining attribute data of M items, where M is a positive integer; and training the behavioral data of the X users and the attribute data of the M items by using the deep learning technology, to obtain the recommendation model.

Specifically, in this embodiment of the present invention, the training the behavioral data of the X users and the attribute data of the M items by using the deep learning technology, to obtain the recommendation model includes: performing feature transformation on the behavioral data of the X users and the attribute data of the M items; and training, by using the deep learning technology, the behavioral data of the X users and the attribute data of the M items on which the feature transformation has been performed, to obtain the recommendation model.

Specifically, in this embodiment of the present invention, the performing feature transformation on the behavioral data of the X users and the attribute data of the M items includes: determining user behavior statistical values respectively corresponding to data types of the behavioral data of the X users, and determining user behavior statistical values respectively corresponding to data types of the attribute data of the M items; and replacing data respectively corresponding to the data types of the behavioral data of the X users with the user behavior statistical values respectively corresponding to the data types of the behavioral data of the X users, and replacing data respectively corresponding to the data types of the attribute data of the M items with the user behavior statistical values respectively corresponding to the data types of the attribute data of the M items.

Specifically, in this embodiment of the present invention, in step 220, the m items satisfying the request data may be determined from the M items according to the attribute data of the M items, and in step 230, the request data and attribute data of the m items are input into the recommendation model, to obtain an ordering factor of the m items, and the order of the m items is determined according to the ordering factor of the m items.

It should be understood that the item recommendation method 200 in this embodiment of the present invention corresponds to descriptions of recommendation of a history item in the method 100, and for the recommendation model using the deep learning technology in this embodiment of the present invention, reference may be made descriptions in the method 100. To avoid repetition, details are not described herein again.

Specifically, in this embodiment of the present invention, after the multiple items satisfying the request data of the first user are determined, the multiple items may be further filtered according to another piece of data. The multiple items may be further filtered according to history behavioral data (for example, browsing, downloading, or bookmarking of an item) of the user. For example, an item that is being browsed, already downloaded, or already bookmarked by the user is further filtered out from the multiple items, so that efficiency of item recommendation to the user can be improved.

It should be understood that in this embodiment of the present invention, item indexes may be created, and attribute data and ordering data that are of an item and attribute data of a history item may be obtained by using an item index. Performance of the recommendation system can be improved by searching for related data of an item by using the item index, and related data of the item satisfying the request data of the first user can be quickly found from the indexes according to the request data of the first user.

Specifically, in this embodiment of the present invention, the request data of the first user may include item requirement data and terminal device data. Items satisfying the item requirement data may be determined according to attribute data of the items, and then items (such as new items and/or history items) supporting the terminal device data are determined from the items satisfying the item requirement data. The item requirement data may include a keyword input by the user or a tab clicked by the user. The terminal device data may include: a model of a mobile phone of the user, an operating system, and the like. For example, if a user searches for a game application, and a mobile phone of the user is an Apple phone, the recommendation system first obtains game applications from an index, and then performs screening on the game applications to choose applications supporting an Apple phone and recommends the applications to the user.

It should be understood that in this embodiment of the present invention, behavioral data of the first user for the items in the recommendation list may be obtained. The recommendation system obtains behavioral data (such as clicking, bookmarking, or downloading) of a user for the items in the recommendation list in time, and the recommendation system is automatically iterated and updated according to the behavioral data fed back by the user.

Therefore, according to the item recommendation method in this embodiment of the present invention, an order, in a recommendation list, of items in the recommendation list is determined according to a recommendation model, and the recommendation model uses a deep learning technology for unsupervised feature-learning during training, so that a feature can be learned by using data, and a large amount of human and material resources consumed for manual feature extraction can be reduced.

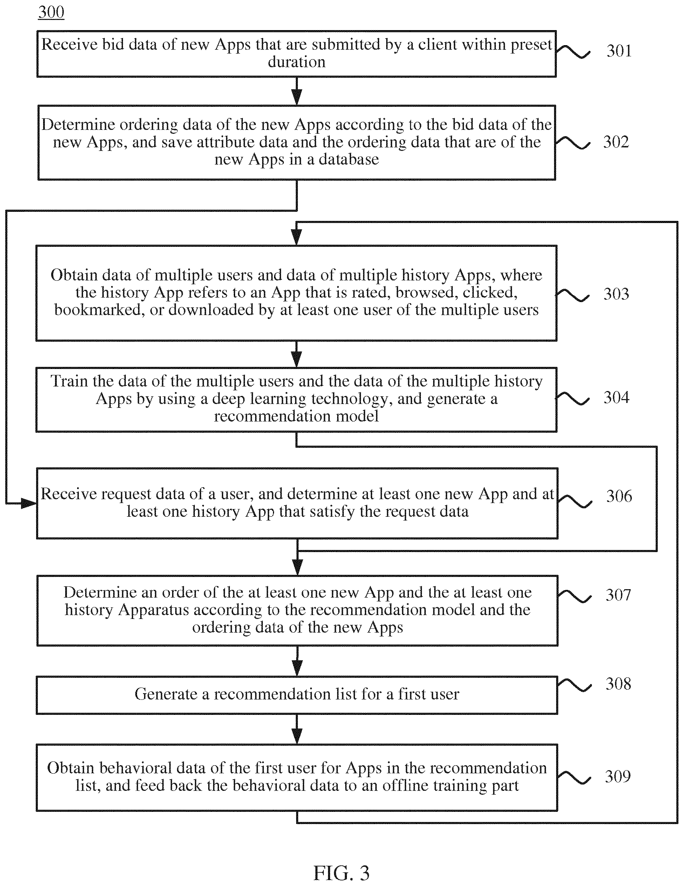

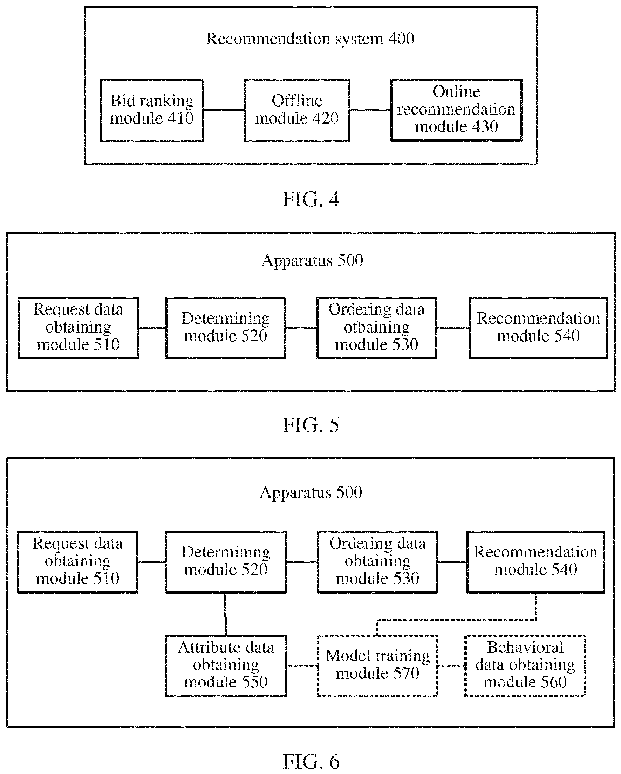

An item recommendation method according to another embodiment of the present invention is described in detail below with reference to FIG. 3 and FIG. 4. FIG. 3 is a schematic flowchart of an item recommendation method 300 according to another embodiment of the present invention, and the method 300 is a specific example of the method 100. FIG. 4 is a schematic block diagram of a recommendation system that performs the method 300 to recommend an item to a user. The recommendation system includes three parts: a bid ranking module 410, an offline module 420, and an online recommendation module 430. The bid ranking module 410 is configured to perform bid ranking on new Apps that are received within preset duration, and store data of the new Apps, on which bid ranking is performed, for query and retrieval by the online module 430. The offline module 420 is configured to generate a recommendation model for query and retrieval by the online module 430. The online module 430 is configured to respond to a request of a user in real time, obtain request data of the user, and generate a recommendation list for the user. For ease of description, in this embodiment of the present invention, an item is described by using an App as an example, but the present invention is not limited thereto.

As shown in FIG. 3, the method 300 includes the following content.

301: The bid ranking module 410 obtains bid data and attribute data (for example, data such as an App type, an App name, an App package, or an App description) of multiple new Apps that are submitted by an App developer and that are received within preset duration. Optionally, on-shelf time of the multiple new Apps and quality of the new Apps that is obtained through offline mining may be further obtained.

302: The bid ranking module 410 performs real-time bid ranking according to information such as bid data of the multiple new Apps, quality of the new Apps, and on-shelf time of the new Apps, the multiple new Apps that are received within the preset duration, determines ordering data of the multiple new Apps, and saves the attribute data and the ordering data that are of the new Apps in a database, for retrieval by the online recommendation module 430.

303: The offline module 420 obtains behavioral data of multiple users and attribute data of multiple history Apps, where the history App refers to an App that is rated, browsed, clicked, bookmarked, or downloaded by at least one user of the multiple users. formats of the data of the multiple users and the data of the multiple history Apps are processed into an input format required for model training, and the data in the input format is saved Optionally, attribute data (such as age, gender, or preference) of the multiple users may be further obtained.

304: The offline module 420 trains, by using a deep learning technology, the data obtained in step 303, and generates a recommendation model for retrieval by the online recommendation module 430.

305: The online recommendation module 430 receives request data of a first user, where the request data includes: App requirement data (such as an input keyword or a clicked tab) and terminal device data (such as a model or a system of a terminal device), and determines at least one new App and at least one history App that satisfy the App requirement data and support the terminal device data. Optionally, an App that is already downloaded or is being browsed by the user may be further filtered out, and the multiple Apps may be further filtered with reference to an App rating, on-shelf time of the Apps, or the like. For example, an App with a relatively low rating or with relatively early on-shelf time is filtered out.

306: The online recommendation module 430 inputs attribute data of the at least one history App and the request data of the first user into the recommendation model, to obtain an ordering factor of at least one history App, sets a presentation position of the at least one new App in a recommendation list, determines an order of the at least one new App according to ordering data of the at least one new App, and determines an order of the at least one history App in remaining positions of the recommendation list according to the ordering factor of the at least one history App.

307: The online recommendation module 430 generates the recommendation list for the first user according to the order of the at least one history App and the at least one new App in the recommendation list.

308: The online recommendation module 430 obtains behavioral data (such as rating, clicking, bookmarking, or downloading) of the first user for Apps in the recommendation list, and feeds back the behavioral data to the offline module 420.

It should be understood that sequence numbers of the foregoing processes do not mean execution sequences. The execution sequences of the processes should be determined according to functions and internal logic of the processes, and should not be construed as a limitation on the implementation processes of this embodiment of the present invention.

Therefore, according to the item recommendation method in this embodiment of the present invention, ordering data of new items is determined according to bid data of the new items, and a recommendation list is generated according to the ordering data of the new items, so that new items can be recommended according to bid data of the new items, so that a problem of cold start of new items can be resolved.

It should be noted that the examples in FIG. 3 and FIG. 4 are used to help a person skilled in the art better understand this embodiment of the present invention, rather than to limit the scope of the embodiments of the present invention. Apparently, a person skilled in the art may make various equivalent modifications or changes according to the examples provided in FIG. 3 and FIG. 4, and such modifications or changes also fall within the scope of the embodiments of the present invention.

The item recommendation method in the embodiments of the present invention is described in detail above with reference to FIG. 1 to FIG. 4, and an item recommendation apparatus in the embodiments of the present invention is described in detail below with reference to FIG. 5 to FIG. 10.

FIG. 5 is a schematic block diagram of an item recommendation apparatus 500 according to an embodiment of the present invention. As shown in FIG. 5, the apparatus 500 includes: a request data obtaining module 510, a determining module 520, an ordering data obtaining module 530, and a recommendation module 540.

The request data obtaining module 510 is configured to obtain request data of a first user. The determining module 520 is configured to determine m new items satisfying the request data, where the m new items are items received within preset duration, and m is a positive integer. The ordering data obtaining module 530 is configured to order the m new items according to bid data corresponding to the m new items, to obtain ordering data of the m new items. The recommendation module 540 is configured to generate a recommendation list for the first user according to the ordering data of the m new items.

Therefore, according to the item recommendation apparatus in this embodiment of the present invention, ordering data of new items is determined according to bid data of the new items, and a recommendation list is generated according to the ordering data of the new items, so that new items can be recommended according to bid data of the new items, and a problem of cold start of new items can be resolved.

Optionally, as another embodiment, as shown in FIG. 6, the apparatus 500 further includes: an attribute data obtaining module 550.

In this embodiment of the present invention, the attribute data obtaining module 550 is configured to: before the determining module determines the m new items satisfying the request data, obtain attribute data of M new items that are received within the preset duration, where M is a positive integer greater than m. The determining module 520 is specifically configured to determine, from the M new items according to the attribute data of the M new items that is obtained by the attribute data obtaining module 550, the m new items satisfying the request data.

Correspondingly, in this embodiment of the present invention, the ordering data obtaining module 530 may order the M new items according to bid data of the M new items, to determine ordering data of the M new items, and then obtain the ordering data of the m new items from the ordering data of the M new items.

The ordering data obtaining module 530 may update ordering data of new items according to bid data of the new items that are received within the preset duration, to facilitate retrieval by the recommendation module 540.

In addition, the ordering data obtaining module 530 may be further specifically configured to order the M new items according to bid data, quality data, or on-shelf time data of the M new items, to determine the ordering data of the M new items. The quality data is information obtained through offline mining by a recommendation system, and may be obtained by means of an evaluation of a correlation of the new item with a history item having user rating information.

Optionally, as another embodiment, the attribute data obtaining module 550 is further configured to obtain attribute data of N history items, where N is a positive integer. As shown in FIG. 6, the apparatus 500 further includes: a behavioral data obtaining module 560, configured to obtain behavioral data of X users, where X is a positive integer; and a model training module 570, configured to train, by using a deep learning technology, the attribute data of the N history items that is obtained by the attribute data obtaining module and the behavioral data of the X users that is obtained by the behavioral data obtaining module, to obtain a recommendation model. The determining module 520 is further configured to: after the request data obtaining module 510 obtains the request data of the first user, determine, according to the attribute data of the N history items that is obtained by the attribute data obtaining module 550, n history items satisfying the request data, where n is a positive integer less than N. The recommendation module 540 is further configured to input the request data and attribute data of the n history items into the recommendation model, to obtain an ordering factor of the n history items. The recommendation module 540 is specifically configured to generate the recommendation list for the first user according to the ordering data of the m new items and the ordering factor of the n history items.

Specifically, in this embodiment of the present invention, the model training module 570 is specifically configured to: perform feature transformation on the behavioral data of the X users that is obtained by the behavioral data obtaining module 560 and the attribute data of the N history items that is obtained by the attribute data obtaining module 550, and train, by using the deep learning technology, the behavioral data of the X users and the attribute data of the N history items on which the feature transformation has been performed, to obtain the recommendation model.

Specifically, in this embodiment of the present invention, the model training module 570 is specifically configured to: determine user behavior statistical values respectively corresponding to data types of the behavioral data of the X users, and determine user behavior statistical values respectively corresponding to data types of the attribute data of the N history items; and replace data respectively corresponding to the data types of the behavioral data of the X users with the user behavior statistical values respectively corresponding to the data types of the behavioral data of the X users, and replace data respectively corresponding to the data types of the attribute data of the N history items with the user behavior statistical values respectively corresponding to the data types of the attribute data of the N history items.

It should be understood that the item in this embodiment of the present invention refers to an object that is recommended to a user, and may be an application App (Application), or may be a commodity or a book, which is not limited in this embodiment of the present invention.

In should be understood that the item recommendation apparatus 500 according to this embodiment of the present invention may correspond to the recommendation system in the item recommendation method 100 according to the embodiment of the present invention, and the foregoing and other operations and/or functions of modules in the apparatus 500 are separately used to implement corresponding procedures of the methods 100 shown in FIG. 1. For brevity, details are not described herein again.

Therefore, according to the item recommendation apparatus in this embodiment of the present invention, ordering data of new items is determined according to bid data of the new items, and a recommendation list is generated according to the ordering data of the new items, so that new items can be recommended according to bid data of the new items, and a problem of cold start of new items can be resolved.

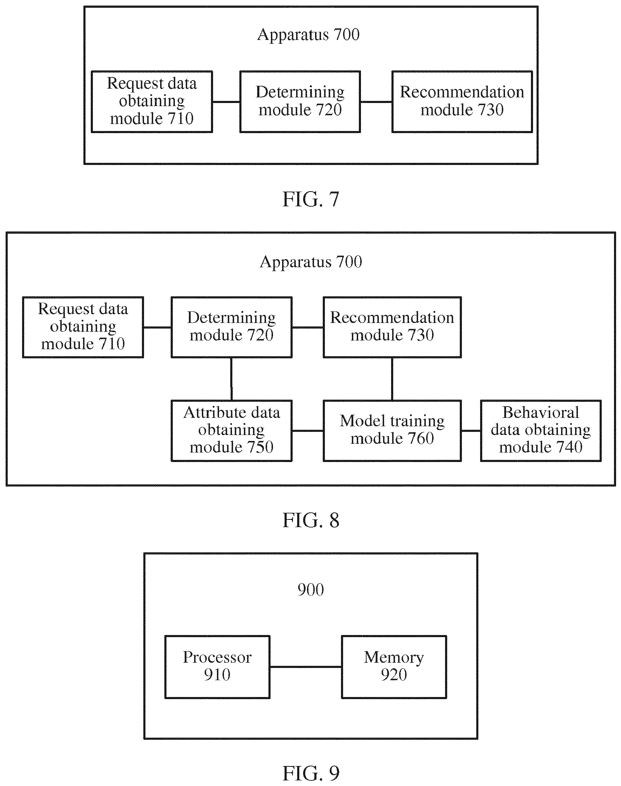

FIG. 7 is a schematic block diagram of an item recommendation apparatus 700 according to another embodiment of the present invention. As shown in FIG. 7, the apparatus 700 includes: a request data obtaining module 710, a determining module 720, and a recommendation module 730.

The request data obtaining module 710 is configured to obtain request data of a first user. The determining module 720 is configured to determine m items that satisfy the request data obtained by the request data obtaining module 710, where m is a positive integer, and the determining module 720 is further configured to determine an order of the m items according to a recommendation model obtained in advance, where the recommendation model is obtained by using a deep learning technology. The recommendation module 730 is configured to generate a recommendation list for the first user according to the order of the m items that is determined by the determining module 720.

Therefore, according to the item recommendation apparatus in this embodiment of the present invention, an order, in a recommendation list, of items in the recommendation list is determined according to a recommendation model, and the recommendation model uses a deep learning technology for unsupervised feature-learning during training, so that a feature can be learned by using data, and a large amount of human and material resources consumed for manual feature extraction can be reduced.

Optionally, as another embodiment, as shown in FIG. 8, the apparatus 700 further includes: a behavioral data obtaining module 740, an attribute data obtaining module 750, and a model training module 760.

The behavioral data obtaining module 740 is configured to obtain behavioral data of X users before the determining modules determines the order of the m items according to the recommendation model, where X is a positive integer. The attribute data obtaining module 750 is configured to obtain attribute data of M items before the determining module determines the order of the m items according to the recommendation model, where M is a positive integer greater than m. The model training module 760 is configured to train, by using the deep learning technology, the behavioral data of the X users that is obtained by the behavioral data obtaining module and the attribute data of the M items that is obtained by the attribute data obtaining module, to obtain the recommendation model.

Specifically, in this embodiment of the present invention, the model training module 760 is specifically configured to: perform feature transformation on the behavioral data of the X users and the attribute data of the M items, and train, by using the deep learning technology, the behavioral data of the X users and the attribute data of the M items on which the feature transformation has been performed, to obtain the recommendation model.

More specifically, in this embodiment of the present invention, the model training module 760 is specifically configured to: determine user behavior statistical values respectively corresponding to data types of the behavioral data of the X users, and determine user behavior statistical values respectively corresponding to data types of the attribute data of the M items; and replace data respectively corresponding to the data types of the behavioral data of the X users with the user behavior statistical values respectively corresponding to the data types of the behavioral data of the X users, and replace data respectively corresponding to the data types of the attribute data of the M items with the user behavior statistical values respectively corresponding to the data types of the attribute data of the M items.

In this embodiment of the present invention, the determining module 720 is specifically configured to determine, from the M items according to the attribute data of the M items that is obtained by the attribute data obtaining module 750, the m items satisfying the request data. The determining module 720 is specifically configured to: input the request data and attribute data of the m items into the recommendation model, to obtain an ordering factor of the m items, and determine the order of the m items according to the ordering factor of the m items.

It should be understood that the item in this embodiment of the present invention refers to an object that is recommended to a user, and may be an application App (Application), or may be a commodity or a book, which is not limited in this embodiment of the present invention.

In should be understood that the item recommendation apparatus 700 according to this embodiment of the present invention may correspond to the recommendation system in the item recommendation method 200 according to the embodiment of the present invention, and the foregoing and other operations and/or functions of modules in the apparatus 700 are separately used to implement corresponding procedures of the method 200 shown in FIG. 2. For brevity, details are not described herein again.

Therefore, according to the item recommendation apparatus in this embodiment of the present invention, an order, in a recommendation list, of items in the recommendation list is determined according to a recommendation model, and the recommendation model uses a deep learning technology for unsupervised feature-learning during training, so that a feature can be learned by using data, and a large amount of human and material resources consumed for manual feature extraction can be reduced.

FIG. 9 is a schematic block diagram of an item recommendation apparatus 900 according to another embodiment of the present invention. As shown in FIG. 9, the item recommendation apparatus 900 includes: a processor 910 and a memory 920, where the memory 920 is configured to store an instruction, and the processor 910 is configured to execute the instruction stored in the memory 920.

The processor 910 is configured to: obtain request data of a first user, determine m new items satisfying the request data, and order the m new items according to bid data corresponding to the m new items, to obtain ordering data of the m new items, where the m new items are items received within preset duration, and m is a positive integer; and generate a recommendation list for the first user according to the ordering data of the m new items.

Therefore, according to the item recommendation apparatus in this embodiment of the present invention, ordering data of new items is determined according to bid data of the new items, and a recommendation list is generated according to the ordering data of the new items, so that new items can be recommended according to bid data of the new items, and a problem of cold start of new items can be resolved.

It should be understood that in the embodiment of the present invention, the processor 910 may be a central processing unit (Central Processing Unit, CPU), or the processor 910 may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor or the processor may be any conventional processor or the like.

The memory 920 may include a read-only memory and a random access memory, and provides an instruction and data to the processor 910. A part of the memory 920 may further include a non-volatile random access memory. For example, the memory 920 may further store device type information.

In an implementation process, each step of the foregoing method may be implemented by a hardware integrated logic circuit in the processor 910 or by an instruction in a software form. Steps of the methods disclosed with reference to the embodiments of the present invention may be directly executed and completed by means of a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 920, and the processor 910 reads information in the memory 920 and completes the steps in the foregoing methods in combination with hardware of the processor 910. To avoid repetition, details are not described herein again.

Specifically, in this embodiment of the present invention, the processor 910 is specifically configured to: before determining the m new items satisfying the request data, obtain attribute data of M new items that are received within the preset duration, where M is a positive integer greater than m. The determining m new items satisfying the request data includes: determining, from the M new items according to the attribute data of the M new items, the m new items satisfying the request data.

Optionally, as another embodiment, the processor 910 is further configured to: obtain attribute data of N history items, where N is a positive integer; obtain behavioral data of X users, where X is a positive integer; and train the attribute data of the N history items and the behavioral data of the X users by using a deep learning technology, to obtain a recommendation model. After obtaining the request data of the first user, the processor 910 is further configured to: determine, according to the attribute data of the N history items, attribute data of n history items satisfying the request data, where n is a positive integer less than N; and input the request data and the attribute data of the n history items into the recommendation model, to obtain an ordering factor of the n history items, where the generating a recommendation list for the first user according to the ordering data of the m new items includes: generating the recommendation list for the first user according to the ordering data of the m new items and the ordering factor of the n history items.

In this embodiment of the present invention, the processor 910 is specifically configured to: perform feature transformation on the behavioral data of the X users and the attribute data of the N history items; and train, by using the deep learning technology, the behavioral data of the X users and the attribute data of the N history items on which the feature transformation has been performed, to obtain the recommendation model.

Further, in this embodiment of the present invention, the processor 910 is specifically configured to: determine user behavior statistical values respectively corresponding to data types of the behavioral data of the X users, and determine user behavior statistical values respectively corresponding to data types of the attribute data of the N history items; and replace data respectively corresponding to the data types of the behavioral data of the X users with the user behavior statistical values respectively corresponding to the data types of the behavioral data of the X users, and replace data respectively corresponding to the data types of the attribute data of the N history items with the user behavior statistical values respectively corresponding to the data types of the attribute data of the N history items.

It should be understood that the item in this embodiment of the present invention refers to an object that is recommended by the recommendation apparatus to a user, and may be an application App (Application), or may be a commodity or a book, which is not limited in this embodiment of the present invention.

In should be understood that the item recommendation apparatus 900 according to this embodiment of the present invention may correspond to the recommendation system in the item recommendation method 100 and the item recommendation apparatus 500 that are according to the embodiments of the present invention, and the foregoing and other operations and/or functions of modules in the apparatus 900 are separately used to implement corresponding procedures of the method 100 shown in FIG. 1. For brevity, details are not described herein again.

Therefore, according to the item recommendation apparatus in this embodiment of the present invention, ordering data of new items is determined according to bid data of the new items, and a recommendation list is generated according to the ordering data of the new items, so that new items can be recommended according to bid data of the new items, and a problem of cold start of new items can be resolved.

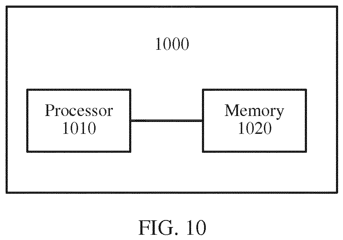

FIG. 10 is a schematic block diagram of an item recommendation apparatus 1000 according to another embodiment of the present invention. As shown in FIG. 10, the item recommendation apparatus 1000 includes: a processor 1010 and a memory 1020, where the memory 1020 is configured to store an instruction, and the processor 1010 is configured to execute the instruction stored in the memory 1020.

The processor 1010 is configured to: obtain request data of a first user; determine m items satisfying the request data, where m is a positive integer; determine an order of the m items according to a recommendation model, where the recommendation model is obtained by using a deep learning technology; and generate a recommendation list for the first user according to the order of the m items that is determined by the recommendation module.

Therefore, according to the item recommendation apparatus in this embodiment of the present invention, an order, in a recommendation list, of items in the recommendation list is determined according to a recommendation model, and the recommendation model uses a deep learning technology for unsupervised feature-learning during training, so that a feature can be learned by using data, and a large amount of human and material resources consumed for manual feature extraction can be reduced.

It should be understood that in the embodiment of the present invention, the processor 1010 may be a central processing unit (Central Processing Unit, CPU), or the processor 1010 may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor or the processor may be any conventional processor or the like.

The memory 1020 may include a read-only memory and a random access memory, and provides an instruction and data to the processor 1010. A part of the memory 1020 may further include a non-volatile random access memory. For example, the memory 1020 may further store device type information.

In an implementation process, each step of the foregoing method may be implemented by a hardware integrated logic circuit in the processor 1010 or by an instruction in a software form. Steps of the methods disclosed with reference to the embodiments of the present invention may be directly executed and completed by means of a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 1020, and the processor 1010 reads information in the memory 1020 and completes the steps in the foregoing methods in combination with hardware of the processor 1010. To avoid repetition, details are not described herein again.

In this embodiment of the present invention, the processor 1010 is further configured to: before determining the order of the m items, obtain behavioral data of X users, where X is a positive integer; obtain attribute data of M items, where M is a positive integer greater than m; and train the behavioral data of the X users and the attribute data of the M items by using the deep learning technology, to obtain the recommendation model.

Specifically, in this embodiment of the present invention, the processor 1010 is specifically configured to: perform feature transformation on the behavioral data of the X users and the attribute data of the M items, and train, by using the deep learning technology, the behavioral data of the X users and the attribute data of the M items on which the feature transformation has been performed, to obtain the recommendation model.

More specifically, in this embodiment of the present invention, the processor 1010 is specifically configured to: determine user behavior statistical values respectively corresponding to data types of the behavioral data of the X users, and determine user behavior statistical values respectively corresponding to data types of the attribute data of the M items; and replace data respectively corresponding to the data types of the behavioral data of the X users with the user behavior statistical values respectively corresponding to the data types of the behavioral data of the X users, and replace data respectively corresponding to the data types of the attribute data of the M items with the user behavior statistical values respectively corresponding to the data types of the attribute data of the M items.

In this embodiment of the present invention, the processor 1010 is specifically configured to: determine the m items satisfying the request data from the M items; and input the request data and attribute data of the m items into the recommendation model, to obtain an ordering factor of the m items, and determine the order of the m items according to the ordering factor of the m items.

It should be understood that the item in this embodiment of the present invention refers to an object that is recommended by the recommendation apparatus to a user, and may be an application App (Application), or may be a commodity or a book, which is not limited in this embodiment of the present invention.

In should be understood that the item recommendation apparatus 1000 according to this embodiment of the present invention may correspond to the item recommendation apparatus in the item recommendation method 200 and the item recommendation apparatus 800 that are according to the embodiments of the present invention, and the foregoing and other operations and/or functions of modules in the apparatus 1000 are separately used to implement corresponding procedures of the method 200 shown in FIG. 2. For brevity, details are not described herein again.

Therefore, according to the item recommendation apparatus in this embodiment of the present invention, an order, in a recommendation list, of items in the recommendation list is determined according to a recommendation model, and the recommendation model uses a deep learning technology for unsupervised feature-learning during training, so that a feature can be learned by using data, and a large amount of human and material resources consumed for manual feature extraction can be reduced.

The term "and/or" in this specification describes only an association relationship for describing associated objects and represents that three relationships may exist. For example, A and/or B may represent the following three cases: Only A exists, both A and B exist, and only B exists.

A person of ordinary skill in the art may be aware that in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An item recommendation method, comprising:
obtaining request data of a first user, determining m new items satisfying the request data, and ordering the m new items according to bid data corresponding to the m new items, to obtain ordering data of the m new items, wherein the m new items are items received within preset duration, and m is a positive integer; and
generating a recommendation list for the first user according to the ordering data of the m new items.

2. The method according to claim 1, wherein before the determining m new items satisfying the request data, the method further comprises:
obtaining attribute data of M new items that are received within the preset duration, wherein M is a positive integer greater than m; and
the determining m new items satisfying the request data comprises:
determining, from the M new items according to the attribute data of the M new items, the m new items satisfying the request data.

3. The method according to claim 1 or 2, wherein the method further comprises:
obtaining attribute data of N history items, wherein N is a positive integer;
obtaining behavioral data of X users, wherein X is a positive integer; and
training the attribute data of the N history items and the behavioral data of the X users by using a deep learning technology, to obtain a recommendation model; wherein
after the obtaining request data of a first user, the method further comprises:
determining, according to the attribute data of the N history items, attribute data of n history items satisfying the request data, wherein n is a positive integer less than N; and
inputting the request data and the attribute data of the n history items into the recommendation model, to obtain an ordering factor of the n history items; and
the generating a recommendation list for the first user according to the ordering data of the m new items comprises:
generating the recommendation list for the first user according to the ordering data of the m new items and the ordering factor of the n history items.

4. The method according to claim 3, wherein the training the behavioral data of the X users and the attribute data of the N history items by using a deep learning technology, to obtain a recommendation model comprises:
performing feature transformation on the behavioral data of the X users and the attribute data of the N history items; and
training, by using the deep learning technology, the behavioral data of the X users and the attribute data of the N history items on which the feature transformation has been performed, to obtain the recommendation model.

5. The method according to claim 4, wherein the performing feature transformation on the behavioral data of the X users and the attribute data of the N history items comprises:
determining user behavior statistical values respectively corresponding to data types of the behavioral data of the X users, and determining user behavior statistical values respectively corresponding to data types of the attribute data of the N history items; and
replacing data respectively corresponding to the data types of the behavioral data of the X users with the user behavior statistical values respectively corresponding to the data types of the behavioral data of the X users, and replacing data respectively corresponding to the data types of the attribute data of the N history items with the user behavior statistical values respectively corresponding to the data types of the attribute data of the N history items.

6. The method according to any one of claims 1 to 5, wherein the item is an application App.

7. An item recommendation method, comprising:
obtaining request data of a first user;
determining m items satisfying the request data, wherein m is a positive integer;
determining an order of the m items according to a recommendation model obtained in advance, wherein the recommendation model is obtained by using a deep learning technology; and
generating a recommendation list for the first user according to the order of the m items.

8. The method according to claim 7, wherein before the determining an order of the m items according to a recommendation model obtained in advance, the method further comprises:
obtaining behavioral data of X users, wherein X is a positive integer;
obtaining attribute data of M items, wherein M is a positive integer; and
training the behavioral data of the X users and the attribute data of the M items by using the deep learning technology, to obtain the recommendation model.

9. The method according to claim 8, wherein the training the behavioral data of the X users and the attribute data of the M items by using the deep learning technology, to obtain the recommendation model comprises:
performing feature transformation on the behavioral data of the X users and the attribute data of the M items; and
training, by using the deep learning technology, the behavioral data of the X users and the attribute data of the M items on which the feature transformation has been performed, to obtain the recommendation model.

10. The method according to claim 9, wherein the performing feature transformation on the behavioral data of the X users and the attribute data of the M items comprises:
determining user behavior statistical values respectively corresponding to data types of the behavioral data of the X users, and determining user behavior statistical values respectively corresponding to data types of the attribute data of the M items; and
replacing data respectively corresponding to the data types of the behavioral data of the X users with the user behavior statistical values respectively corresponding to the data types of the behavioral data of the X users, and replacing data respectively corresponding to the data types of the attribute data of the M items with the user behavior statistical values respectively corresponding to the data types of the attribute data of the M items.

11. The method according to any one of claims 8 to 10, wherein the determining m items satisfying the request data comprises:
determining, from the M items according to the attribute data of the M items, the m items satisfying the request data; and
the determining an order of the m items according to the recommendation model comprises:
inputting the request data and attribute data of the m items into the recommendation model, to obtain an ordering factor of the m items, and
determining the order of the m items according to the ordering factor of the m items.

12. The method according to any one of claims 7 to 11, wherein the item is an application App.

13. An item recommendation apparatus, comprising:
a request data obtaining module, configured to obtain request data of a first user;
a determining module, configured to determine m new items satisfying the request data, wherein the m new items are items received within preset duration, and m is a positive integer;
an ordering data obtaining module, configured to order the m new items according to bid data corresponding to the m new items, to obtain ordering data of the m new items; and
a recommendation module, configured to generate a recommendation list for the first user according to the ordering data of the m new items.

14. The apparatus according to claim 13, further comprising:
an attribute data obtaining module, configured to: before the determining module determines the m new items satisfying the request data, obtain attribute data of M new items that are received within the preset duration, wherein M is a positive integer greater than m; and
the determining module is specifically configured to determine, from the M new items according to the attribute data of the M new items that is obtained by the attribute data obtaining module, the m new items satisfying the request data.

15. The apparatus according to claim 13 or 14, wherein the attribute data obtaining module is further configured to obtain attribute data of N history items, wherein N is a positive integer; and
the apparatus further comprises:
a behavioral data obtaining module, configured to obtain behavioral data of X users, wherein X is a positive integer; and
a model training module, configured to train, by using a deep learning technology, the attribute data of the N history items that is obtained by the attribute data obtaining module and the behavioral data of the X users that is obtained by the behavioral data obtaining module, to obtain a recommendation model; wherein
the determining module is further configured to: after the request data obtaining module obtains the request data of the first user, determine, according to the attribute data of the N history items that is obtained by the attribute data obtaining module, n history items satisfying the request data, wherein n is a positive integer less than N;
the recommendation module is further configured to input the request data and attribute data of the n history items into the recommendation model, to obtain an ordering factor of the n history items; and
the recommendation module is specifically configured to generate the recommendation list for the first user according to the ordering data of the m new items and the ordering factor of the n history items.

16. The apparatus according to claim 15, wherein the model training module is specifically configured to: perform feature transformation on the behavioral data of the X users that is obtained by the behavioral data obtaining module and the attribute data of the N history items that is obtained by the attribute data obtaining module, and train, by using the deep learning technology, the behavioral data of the X users and the attribute data of the N history items on which the feature transformation has been performed, to obtain the recommendation model.

17. The apparatus according to claim 16, wherein the model training module is specifically configured to: determine user behavior statistical values respectively corresponding to data types of the behavioral data of the X users, and determine user behavior statistical values respectively corresponding to data types of the attribute data of the N history items; and replace data respectively corresponding to the data types of the behavioral data of the X users with the user behavior statistical values respectively corresponding to the data types of the behavioral data of the X users, and replace data respectively corresponding to the data types of the attribute data of the N history items with the user behavior statistical values respectively corresponding to the data types of the attribute data of the N history items.

18. The apparatus according to any one of claims 13 to 17, wherein the item is an application App.

19. An item recommendation apparatus, comprising:
a request data obtaining module, configured to obtain request data of a first user;
a determining module, configured to determine m items that satisfy the request data obtained by the request data obtaining module, wherein m is a positive integer, and
the determining module is further configured to determine an order of the m items according to a recommendation model obtained in advance, wherein the recommendation model is obtained by using a deep learning technology; and
a recommendation module, configured to generate a recommendation list for the first user according to the order of the m items that is determined by the determining module.

20. The apparatus according to claim 19, further comprising:
a behavioral data obtaining module, configured to obtain behavioral data of X users before the determining modules determines the order of the m items according to the recommendation model, wherein X is a positive integer;
an attribute data obtaining module, configured to obtain attribute data of M items before the determining module determines the order of the m items according to the recommendation model, wherein M is a positive integer greater than m; and
a model training module, configured to train, by using the deep learning technology, the behavioral data of the X users that is obtained by the behavioral data obtaining module and the attribute data of the M items that is obtained by the attribute data obtaining module, to obtain the recommendation model.

21. The apparatus according to claim 20, wherein the model training module is specifically configured to: perform feature transformation on the behavioral data of the X users and the attribute data of the M items, and train, by using the deep learning technology, the behavioral data of the X users and the attribute data of the M items on which the feature transformation has been performed, to obtain the recommendation model.

22. The apparatus according to claim 21, wherein the model training module is specifically configured to: determine user behavior statistical values respectively corresponding to data types of the behavioral data of the X users, and determine user behavior statistical values respectively corresponding to data types of the attribute data of the M items; and replace data respectively corresponding to the data types of the behavioral data of the X users with the user behavior statistical values respectively corresponding to the data types of the behavioral data of the X users, and replace data respectively corresponding to the data types of the attribute data of the M items with the user behavior statistical values respectively corresponding to the data types of the attribute data of the M items.

23. The apparatus according to any one of claims 20 to 22, wherein the determining module is specifically configured to determine, from the M items according to the attribute data of the M items that is obtained by the attribute data obtaining module, the m items satisfying the request data; and
the determining module is specifically configured to: input the request data and attribute data of the m items into the recommendation model, to obtain an ordering factor of the m items, and determine the order of the m items according to the ordering factor of the m items.

24. The apparatus according to any one of claims 19 to 23, wherein the item is an application App.
